# EUROPÄISCHE PATENTSCHRIFT

(11) **EP 3 131 781 B1**
(45) Veröffentlichungstag und Bekanntmachung des Hinweises auf die Patenterteilung: **07.11.2018**
(21) Anmeldenummer: 15735668.4
(22) Anmeldetag: 03.07.2015
(51) Int. Cl.: B60L 11/18, B60L 5/36, H02J 7/00

(54) **LADEVORRICHTUNG FÜR EIN ELEKTRISCH AUFLADBARES FAHRZEUG**
CHARGING DEVICE FOR AN ELECTRICALLY CHARGEABLE VEHICLE
DISPOSITIF DE CHARGE POUR UN VÉHICULE ÉLECTRIQUE RECHARGEABLE

(30) Priorität: 16.07.2014 DE 102014213831
(43) Veröffentlichungstag der Anmeldung: 22.02.2017
(73) Patentinhaber: Siemens Mobility GmbH, 81739 München (DE)
(72) Erfinder: BÜHS, Florian, 10777 Berlin (DE); LASKE, Andreas, 10318 Berlin (DE); ROMPE, Andre, 12621 Berlin Kaulsdorf (DE)
(86) Internationale Anmeldenummer: PCT/EP2015/065172
(87) Internationale Veröffentlichungsnummer: WO 2016/008739

(56) Entgegenhaltungen:
- EP-A2- 3 141 417
- WO-A2-2010/003021
- DE-A1- 4 404 331
- DE-A1- 4 404 331
- Brave Creative Peterborough: "Towards electromobility Gothenburg's plug-in hybrid experience and beyond - Bus & Coach Buyer", , 27. Januar 2014 (2014-01-27), XP055211134, Gefunden im Internet: URL:http://www.busandcoachbuyer.com/toward s-electromobility-gothenburgs-plug-hybrid- experience-beyond/ [gefunden am 2015-09-03]
- Johan Hellsing: "Mid-term Report "Report on 3 buses built"", , 13. September 2013 (2013-09-13), XP055189897, Gefunden im Internet: URL:http://www.hyperbus.se/download/18.52b 58bdf14510b15162b4bbb/1396356737933/Hyperb us-Report on 3 buses built-VolvoBus-JH,V1.pdf [gefunden am 2015-05-19]
- Brave Creative Peterborough: "Towards electromobility Gothenburg's plug-in hybrid experience and beyond - Bus & Coach Buyer", , 27 January 2014 (2014-01-27), XP055211134, Retrieved from the Internet: URL:http://www.busandcoachbuyer.com/toward s-electromobility-gothenburgs-plug-hybrid- experience-beyond/ [retrieved on 2015-09-03]
- Johan Hellsing: "Mid-term Report "Report on 3 buses built"", , 13 September 2013 (2013-09-13), XP055189897, Retrieved from the Internet: URL:http://www.hyperbus.se/download/18.52b 58bdf14510b15162b4bbb/1396356737933/Hyperb us-Report on 3 buses built-VolvoBus-JH,V1.pdf [retrieved on 2015-05-19]

## Beschreibung

Die Erfindung betrifft ein elektrisch aufladbares Fahrzeug und eine stationäre Ladestation zum Aufladen des Fahrzeugs, wobei sowohl das Fahrzeug sowie die Ladestation jeweils wenigstens zwei elektrische Kontakte aufweisen, um in gegenseitigem Kontakt eine galvanische Verbindung zwischen dem Fahrzeug und der Ladestation herzustellen.

Ladevorrichtungen umfassend ein elektrisch aufladbares Fahrzeug und eine stationäre Ladestation zum Aufladen des Fahrzeugs sind aus dem Stand der Technik bekannt. Die EP 2 504 190 B1 zeigt eine Ladestation mit einer in Querrichtung des auf einer vorgegebenen Parkposition parkenden Fahrzeugs zweigeteilten Stromschiene mit zwei Polen und entsprechend zwei gegenseitig isolierten elektrischen Kontakte, die auf einer gemeinsamen Längsachse liegen. Auf dem Fahrzeug sind beabstandet voneinander zwei Stromabnehmer angeordnet, mit zwei parallel zueinander in Querrichtung des Fahrzeugs verlaufenden elektrischen Kontakten, die auf dem Dach des Fahrzeugs in vertikaler Richtung zum Fahrzeug bewegbar angeordnet sind. Zum Aufladen der Energiespeicher des Fahrzeugs wird der Stromabnehmer zur Stromschiene hin bewegt und eine galvanische Verbindung geschlossen.

Die Stromabnehmer weisen dazu eine Mechanik und entsprechende Antriebe auf, was eine zusätzliche Gewichtsbelastung des Fahrzeugs mit sich bringt und was zu einem vergrößerten Lichtraumprofil des Fahrzeugs führt.

WO 2010/003021 betrifft eine stationäre Ladevorrichtung für ein elektrisch aufladbares Fahrzeug. Das Fahrzeug weist zwei parallele Schienen auf, die von den nebeneinander angeordneten Kontakten der Ladestation kontaktiert werden.

Der Erfindung liegt die Aufgabe zugrunde, eine kostengünstig herzustellende und zu betreibende Ladevorrichtung vorzuschlagen.

Gelöst wird die Aufgabe durch die Merkmale des unabhängigen Patentanspruchs. Weiterbildungen und Ausgestaltungen der Erfindung finden sich in den Merkmalen der abhängigen Patentansprüche wieder.

Eine erfindungsgemäße Ladestation für ein Fahrzeug umfasst wenigstens vier elektrische Kontakte, um in gegenseitigem Kontakt mit wenigstens vier komplementären elektrischen Kontakten des Fahrzeugs elektrische Verbindungen zwischen dem Fahrzeug und der Ladestation herzustellen. Analog umfasst ein erfindungsgemäßes elektrisch aufladbares Fahrzeug wenigstens vier komplementäre elektrische Kontakte, um in gegenseitigem Kontakt mit den wenigstens vier elektrischen Kontakten der Ladestation die elektrischen Verbindungen zwischen dem Fahrzeug und der Ladestation herzustellen. Jedes Kontaktpaar bestehend aus einem elektrischen Kontakt der Ladestation und seinem komplementären elektrischen Kontakt des Fahrzeugs stellt insbesondere eine elektrische Verbindung her. Insbesondere berühren sich die zueinander komplementären elektrischen Kontakte und bilden so eine galvanische Verbindung zwischen Ladestation und Fahrzeug. Bei jeweils vier zueinander komplementären elektrischen Kontakten sind somit vier elektrisch leitfähige, galvanische Verbindungen herzustellen, über welche elektrische Energie von der Ladestation auf das Fahrzeug übertragen werden kann. Die jeweils zueinander komplementären elektrischen Kontakte der Ladestation und des Fahrzeugs bilden die Verbindungspartner der galvanischen Verbindung.

Darüber hinaus ist die Ladestation erfindungsgemäß derart ausgebildet ist, dass ihre elektrischen Kontakte wenigstens vertikal bewegbar ausgeführt sind, wobei sie Längen aufweisen, welche eine Breite des Fahrzeugs unterschreiten, und wobei wenigstens ein elektrischer Kontakt der Ladestation so angeordnet ist, dass er in einer vorgegebenen Ladeposition des Fahrzeugs quer zu seinem komplementären elektrischen Kontakt des Fahrzeugs verläuft.

Hingegen sind die elektrischen Kontakte des Fahrzeugs fahrzeugseitig fest angeordnet, wobei sie Längen aufweisen, welche eine Breite des Fahrzeugs unterschreiten, und wobei wenigstens ein elektrischer Kontakt des Fahrzeugs so angeordnet ist, dass er in einer vorgegebenen Ladeposition des Fahrzeugs quer zu seinem komplementären elektrischen Kontakt der Ladestation verläuft.

Gemäß der Erfindung sind somit die jeweils wenigstens vier elektrischen Kontakte der Ladestation und des Fahrzeugs jeweils so angeordnet, dass sie in der vorgegebenen Ladeposition des Fahrzeugs quer zu ihren jeweils komplementären elektrischen Kontakten verlaufen.

Die elektrischen Kontakte der Ladestation und/oder des Fahrzeugs sind bevorzugt jeweils länglich ausgebildet, wobei sie jeweils eine vorgegebene und begrenzte Länge aufweisen, welche eine Breite des Fahrzeugs unterschreiten. Jeder elektrische Kontakt weist eine Länge und eine Breite auf. Im Verhältnis zur Breite weist er eine größere Länge auf. Somit gilt er als länglich. Seine Länge erstreckt sich entlang einer Längsachse. Jede der länglich ausgebildeten Kontakte weist daher jeweils eine zu identifizierende Längsachse auf. Er ist somit länglich entlang seiner Längsachse ausgebildet. Sowohl seine Länge, als auch seine Breite ist auf ein vorgegebenes Maß begrenzt. Dieses beträgt insbesondere weniger als die Breite des Fahrzeugs im Bereich seiner elektrischen Kontakte. Gemäß eines Ausgestaltungsbeispiels beträgt die Länge eines elektrischen Kontakts des Fahrzeugs weniger als 80% der Breite des Fahrzeugs, insbesondere weniger als 50%. Gemäß eines weiteren Ausgestaltungsbeispiels beträgt die Länge eines elektrischen Kontakts der Ladestation ebenfalls weniger als 80% der Breite des Fahrzeugs, insbesondere weniger als 50%. Beispielsweise weisen sämtliche elektrischen Kontakte der Ladestation und/oder des Fahrzeugs gleiche Längen auf. Je nach Ausrichtung können die Längen aber auch variieren.

Weitergebildet weist jeder elektrische Kontakt eine Kontaktfläche auf. Zueinander komplementäre elektrische Kontakte weisen insbesondere zueinander komplementäre Kontaktflächen auf. Vorteilhaft ist jede Kontaktfläche eben ausgeformt. Jede Kontaktfläche liegt dann in einer vorgegebenen Ebene und weist eine Länge und eine Breite auf.

Um eine galvanische Verbindung zwischen den zueinander komplementären elektrischen Kontakten herzustellen, berühren sie sich gegenseitig. Der gegenseitige Kontakt kann theoretisch in einem Punkt erfolgen, beispielsweise, wenn die elektrischen Kontakte als Drähte ausgeformt sind und einen kreisrunden Querschnitt aufweisen. Liegen die zueinander komplementären elektrischen Kontakte zudem in zwei zueinander parallelen Ebenen und die Projektionen ihrer Längsachsen in eine dritte, ebenfalls parallele Ebene schneiden sich, dann berühren sich die zueinander komplementären elektrischen Kontakte in nur einem Punkt. Technisch jedoch berühren sich die zueinander komplementären elektrischen Kontakte flächig. Dabei stehen die entsprechenden Kontaktflächen in gegenseitigem Kontakt.

Daher wird nachfolgend auch von flächigem Kontakt ausgegangen oder die Erfindung anhand ebener Kontaktflächen näher erläutert, ohne dass die Erfindung darauf beschränkt sein soll.

Um einen Versatz des Fahrzeugs aus einer vorgegebenen, idealen Ladeposition heraus in Richtung seiner Längsachse und/oder seiner Querachse zu kompensieren, verläuft wenigstens ein elektrischer Kontakte der Ladestation quer zu seinem komplementären elektrischen Kontakt des Fahrzeugs in der vorgegebenen Ladeposition des Fahrzeugs. Insbesondere verlaufen alle zueinander komplementären elektrischen Kontakte quer zueinander. Die jeweils zueinander komplementären elektrischen Kontakte des Fahrzeugs sowie der Ladestation zur Ausbildung jeweils einer galvanischen Verbindung sind in einer vorgegebenen Ladeposition des Fahrzeugs so angeordnet, dass sich die Projektionen ihrer Längsachsen in eine Projektionsebene parallel zu den Längsachsen kreuzen bzw. jeweils senkrecht schneiden. Das horizontale Dach des Fahrzeugs kann beispielsweise eine solche Projektionsebene sein, welche insbesondere parallel zu den entsprechenden Längsachsen der elektrischen Kontakte liegt.

Gemäß der Erfindung liegen die wenigstens vier elektrischen Kontakte der Ladestation und die wenigstens vier elektrischen Kontakte des Fahrzeugs jeweils in einer gemeinsamen Ebene. Diese gemeinsame Ebene verläuft insbesondere horizontal, bzw. mit einer geringen Neigung.

Die zueinander komplementären Kontaktflächen des Fahrzeugs und der Ladestation liegen insbesondere jeweils in zueinander parallelen Ebenen, weitergebildet sind die Ebenen horizontal ausgerichtet, so dass die Kontaktflächen des Fahrzeugs und der Ladestation jeweils horizontal verlaufen. So ist eine großflächige galvanische Verbindung zwischen den zueinander komplementären Kontaktflächen herzustellen.

Bei dem Fahrzeug handelt es sich um ein elektrisch betriebenes, insbesondere um ein elektrisch angetriebenes Fahrzeug. Beispielsweise handelt es sich um ein Fahrzeug des öffentlichen Personenverkehrs, wie z.B. ein Elektrobus. Die Ladestation ist hingegen ortsfest mit ihrer Umgebung verbunden. Beispielsweise ist sie an Haltestellen des Liniennetzes des Elektrobusses angeordnet. Die galvanische Verbindung zwischen Ladestation und Fahrzeug dient vornehmlich dem Aufladen von Energiespeichern des Fahrzeugs.

Die wenigstens vier Kontakte der Ladestation und/oder die die wenigstens vier elektrischen Kontakte des Fahrzeugs können jeweils ihrer Länge nach senkrecht oder parallel zueinander verlaufen.

Gemäß einer Ausführungsform der Erfindung liegen die Kontaktflächen der Ladestation und/oder des Fahrzeugs in einer gemeinsamen Ebene und verlaufen ihrer Länge nach senkrecht oder parallel zueinander.

Darüber hinaus sind die wenigstens vier elektrischen Kontakte der Ladestation und die wenigstens vier elektrischen Kontakte des Fahrzeugs erfindungsgemäß jeweils ihrer Länge nach rechteckförmig oder kreuzförmig angeordnet.Verlaufen zwei elektrische Kontakte ihrer Länge nach parallel zueinander, verlaufen ihre Längsachsen parallel zueinander. Gleichermaßen schneiden sich ihre Längsachsen senkrecht, wenn sie ihrer Länge nach senkrecht zueinander verlaufen. Dabei müssen sich die elektrischen Kontakte selbst nicht zwingend schneiden. Weitergebildet sind die elektrischen Kontakte des Fahrzeugs und/oder die elektrischen Kontakte der Ladestation jeweils gegenseitig isoliert. Sie sind somit frei von einem Überlapp.

Vier rechteckförmig angeordnete elektrische Kontakte weisen zwei jeweils zwei parallele Längsachsen auf, welche senkrecht zu den zwei Längsachsen der weiteren elektrischen Kontakte stehen, wobei sich die Längsachsen derart in vier Punkten schneiden, dass sie ein Rechteck umschließen und die Seiten des Rechtecks bilden. Insbesondere sind die elektrischen Kontakte derart angeordnet, dass sie ein Quadrat umgeben. Sind vier elektrische Kontakte kreuzförmig angeordnet, so fallen jeweils zwei Längsachsen von zwei elektrischen Kontakten zusammen, die sich in nur einem Punkt schneiden. Die elektrischen Kontakte selbst, die eine gemeinsame Längsachse aufweisen, liegen dann auf unterschiedlichen Seiten des Schnittpunkts ihrer Längsachsen.

Eine erfindungsgemäße Ladevorrichtung umfasst eine stationäre erfindungsgemäße Ladestation und wenigstens ein erfindungsgemäßes elektrisch aufladbares Fahrzeug. In der vorgegebenen Ladeposition des Fahrzeugs sind wenigstens ein elektrischer Kontakt des Fahrzeugs und wenigstens ein zur Herstellung der galvanischen Verbindung komplementärer elektrischer Kontakt der Ladestation derart angeordnet, dass sie quer zueinander verlaufen. Insbesondere sind alle zueinander komplementären Kontakte des Fahrzeugs und der Ladestation zur Herstellung von elektrischen Verbindungen in einer vorgegebenen Ladeposition des Fahrzeugs derart angeordnet sind, dass quer zueinander verlaufen.

Erfindungsgemäß können vier elektrische Kontakte des Fahrzeugs rechteckförmig angeordnet sein und vier elektrische Kontakte der Ladestation sind kreuzförmig angeordnet. Umgekehrt können die die vier elektrischen Kontakte des Fahrzeugs kreuzförmig und die vier elektrischen Kontakte der Ladestation rechteckförmig angeordnet sein.

So Überlappen sich die jeweils komplementären Kontakte oder deren Kontaktflächen zur Herstellung der galvanischen Verbindung auch bei einem Versatz des Fahrzeugs aus seiner idealen, vorgegebenen Ladeposition heraus. Die Ladeposition kann auch als Parkposition bezeichnet werden, da das Fahrzeug parkend aufgeladen wird.

Mittels vier elektrischer Kontakte lassen sich vier elektrische Pole bilden. Die Kontakte oder zumindest ihre Kontaktflächen sind aus einem elektrisch leitfähigen Werkstoff gefertigt, beispielsweise sind sie aus Kupfer oder Graphit hergestellt.

Eine Weiterbildung der Ladestation sieht vor, dass sie einen Galgen umfasst, mittels welchem die elektrischen Kontakte der Ladestation vertikal beweglich ausgebildet sind. Die elektrischen Kontakte sind dann insbesondere an einem zur Erde weisenden Endes des Galgens frei von unten zugänglich angeordnet. Der Galgen kann seinerseits ein ortsfestes Gestell und einen Ausleger oder einen mehrgliedrigen Arm umfassen, mittels welchem es möglich ist, die elektrischen Kontakte in wenigstens vertikaler Richtung zu bewegen. In einer anderen Ausgestaltung können die Kontakte an Seilen befestigt sein, die durch zwei oder mehr steuerbare Seilwinden positioniert werden. Vertikal verläuft auch eine Hochachse des Fahrzeugs in der vorgegebenen Lade- oder Parkposition des Fahrzeugs. Der Galgen kann darüber hinaus auch derart ausgebildet sein, die elektrischen Kontakte in Richtung der Längsachse des Fahrzeugs und/oder in Richtung der Querachse des Fahrzeugs zu bewegen. Ein Vorteil der Erfindung besteht jedoch darin, dass durch die Form und Anordnung der elektrischen Kontakte oder ihrer Kontaktflächen eine Ausrichtung der elektrischen Kontakte oder ihrer Kontaktflächen in Richtung der Längsachse des Fahrzeugs und/oder in Richtung der Querachse des Fahrzeugs bei einem Versatz des Fahrzeugs innerhalb einer bestimmten Toleranz aus seiner vorgegebenen Lade- oder Parkposition heraus in Quer- und/oder Längsrichtung nicht zwingend erforderlich ist. Daher kann die Ladestation einfach und kostengünstig hergestellt und betrieben werden.

Gemäß einer weiteren Weiterbildung ist vorgesehen, dass die elektrischen Kontakte des Fahrzeugs auf einem Dach des Fahrzeugs frei von oben zugänglich angeordnet sind.

Um ein erfindungsgemäßes Fahrzeug mittels einer erfindungsgemäßen Ladestation aufzuladen werden folgende Verfahrensschritte durchgeführt:
- Bewegen des Fahrzeugs in einen vorgegebenen Bereich der Ladestation,
- Bewegen der elektrischen Kontakte der Ladestation in vertikaler Richtung zum Fahrzeug,
- Herstellen eines galvanischen Kontakts zwischen zueinander komplementären elektrischen Kontakten der Ladestation und des Fahrzeugs.
Nach Abschluss des Ladevorgangs wird der galvanische Kontakt zwischen den zueinander komplementären elektrischen Kontakten der Ladestation und des Fahrzeugs gelöst, die elektrischen Kontakte der Ladestation in vertikaler Richtung vom Fahrzeug weg bewegt und das Fahrzeug aus dem vorgegebenen Bereich der Ladestation wegbewegt.

Das Herstellen der galvanischen Kontakte zwischen den zueinander komplementären elektrischen Kontakten der Ladestation und des Fahrzeugs erfolgt insbesondere unter Aufbringen einer vorgegebenen Kontaktkraft. Diese wirkt insbesondere senkrecht auf die Kontaktflächen.

Die Erfindung lässt zahlreiche Ausführungsformen zu. Sie wird anhand der nachfolgenden Figuren näher erläutert, in denen jeweils ein Ausgestaltungsbeispiel dargestellt ist. Gleiche Elemente in den Figuren sind mit gleichen Bezugszeichen versehen.
- Fig. 1: zeigt schematisch eine erfindungsgemäße Ladevorrichtung,
- Fig. 2: zeigt einen Teilschnitt durch eine erfindungsgemäße Ladestation in Kontakt mit einem erfindungsgemäßen Fahrzeug.

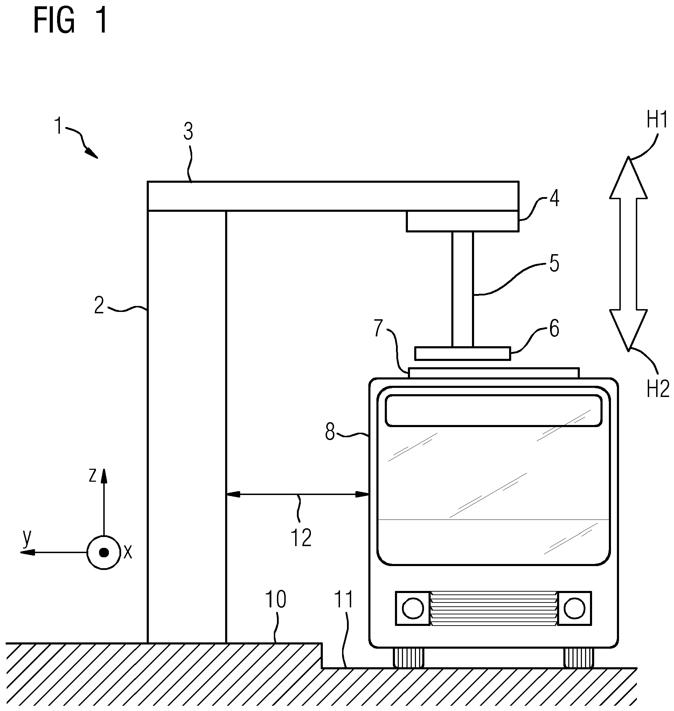

In Fig. 1 ist schematisch eine erfindungsgemäße Ladestation 1 von der Seite und ein erfindungsgemäßes Fahrzeug 8 von vorne dargestellt.

Bei dem Fahrzeug 8 handelt es sich hier um einen E-Bus des öffentlichen Personennahverkehrs, welcher einen elektrischen Antrieb umfasst und einen Energiespeicher zum Bereitstellen der elektrischen Energie für den Antrieb. Der Energiespeicher ist aufladbar. Sie umfassen beispielsweise Akkumulatoren und/oder Kondensatoren.

Zum Aufladen der Energiespeicher des Fahrzeugs 8 ist eine Ladestation 1 vorgesehen. Neben Bussen können auch andere Fahrzeuge, beispielsweise Lastkraftwagen oder Straßenbahnen an der Ladestation aufladbar sein und erfindungsgemäß ausgestaltet sein.

Die Ladestation 1 ist hier galgenförmig ausgebildet und umfasst ein ortsfestes Gestell 2 mit einem Ausleger 3 als verfahrbarem Teil der Ladestation 1, der über der Fahrbahn 11 endet. Das ortsfeste Gestell 2 ist starr auf dem Boden 10 verankert. Der Ausleger ist hier ein um die x- und die y-Achse beweglicher, ein- oder mehrgliedriger Arm. Er weist an seinem vom Gestell 2 entfernten Ende einen über ein Gelenk 4 verbundenen Stempel 5 mit mehreren elektrischen Kontakten an seiner dem Fahrzeug zugewandten Stirnseite 6 auf, um komplementäre elektrische Kontakte des Fahrzeugs 8 auf einem der Stirnseite 6 des Stempels 5 zugewandtem Dach des Fahrzeugs zu kontaktieren. Die x-Achse verläuft dabei parallel zu einer Längsachse des Fahrzeugs 8, wenn das Fahrzeug 8 in einer vorgegebenen, idealen Ladeposition zur Ladestation 1 steht. Die z-Achse steht dann senkrecht auf Fahrbahn 11 und somit auch senkrecht zur x-Achse. Die Y-Achse verläuft horizontal in Richtung der Querachse des Fahrzeugs 8 in der vorgegebenen Ladeposition.

Die elektrischen Kontakte der Ladestation 1 sind zwischen einer oberen Ruheposition H1 und einer unteren Arbeitsposition H2 vertikal und damit mit einer Richtungskomponenten parallel zur Hochachse des Fahrzeugs 8 beweglich. Zum Herstellen einer galvanischen Verbindung mit dem Fahrzeug 8 und zum Aufladen des Fahrzeugs 8 werden sie aus der oberen Ruheposition H1 in die untere Arbeitsposition H2 abgesenkt. Sie sind zum Fahrzeug 8 hin bewegbar und auch wieder vom Fahrzeug 8 weg bewegbar. Die komplementären elektrischen Kontakte des Fahrzeugs 8 sind in einem vorgegebenen Bereich 7 auf dem Fahrzeugdach montiert.

Die nachfolgend beschriebene Ausführung der zueinander komplementären elektrischen Kontakte ermöglicht einen Ausgleich der Parkposition des Fahrzeugs 8 in x- und y-Richtung bei geringem Platzbedarf für die Kontakte auf dem Fahrzeugdach und an der Ladestation 1. Veranschaulicht ist hier, dass der Abstand 12 des Fahrzeugs 8 in y-Richtung zur Ladestation 1 in Grenzen veränderbar ist. Es existiert somit ein Fenster in x- und y-Richtung um die vorgegebene, ideale Parkposition des Fahrzeugs 8, in welchem das Fahrzeug 8, ohne die Qualität der Kontaktierung zu beeinflussen, geparkt werden kann. Das Aufladen des Fahrzeugs 8 an der Ladestation 1 erfolgt im Stand.

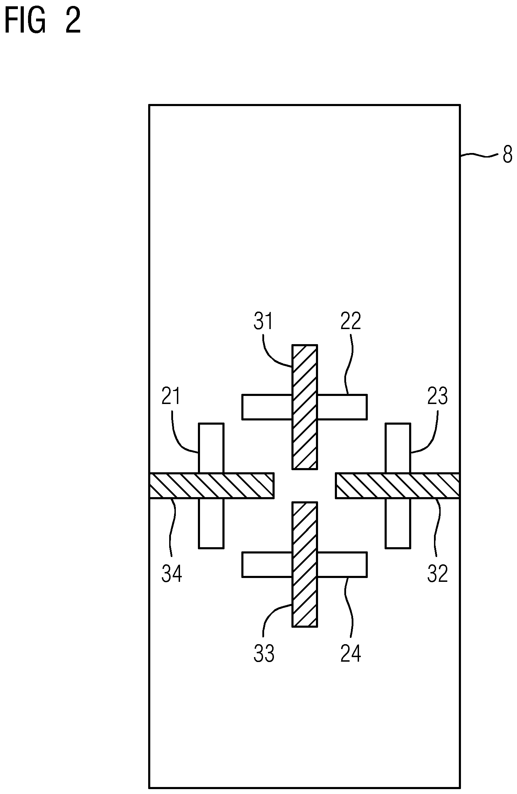

Fig. 2 skizziert nun die Form und die Anordnung der elektrischen Kontakte 31-34 und 21-24 der Ladestation und des Fahrzeugs 8. Wie bereits ausgeführt, weist die Ladestation wenigstens vier elektrische Kontakte 31, 32, 33 und 34 zum Herstellen einer galvanischen Verbindung mit dem Fahrzeug auf. Analog umfasst das Fahrzeug 8 wenigstens vier elektrische Kontakte 21, 22, 23 und 24, um die galvanische Verbindung mit der Ladestation herzustellen. In diesem Ausführungsbeispiel umfassen sowohl das Fahrzeug 8 als auch die Ladestation jeweils vier elektrische Kontakte 21-24 und 31-34, welche paarweise komplementär zueinander ausgebildet sind.

Die elektrischen Kontakte 21-24 und 31-34 selbst können viele geometrische Formen annehmen. Hier sind sie jeweils rechteckförmig ausgeformt und gegeneinander isoliert. In der hier veranschaulichten Draufsicht auf das Fahrzeugdach von oben sind die jeweiligen Kontaktflächen der elektrischen Kontakte zu sehen. Ihre Länge ist begrenzt und dennoch jeweils deutlich größer als ihre Breite. Sie gelten somit als länglich und sie weisen jeweils eine, der Übersichtlichkeit wegen, nicht gezeichnete Längsachse auf. Ihre Mindestlänge beträgt insbesondere jeweils mindestens ca. 20% der Breite des Fahrzeugs 8 im Bereich der Kontaktflächen der elektrischen Kontakte 21-24.

Die Längen der Kontaktflächen der elektrischen Kontakte 21, 23, 31 und 33, welche sich in x-Richtung erstrecken, legen das Maß fest, inwieweit das Fahrzeug 8 in x-Richtung aus der vorgegebenen Parkposition ohne Auswirkungen auf die Kontaktierung zum Aufladen unter der Ladestation geparkt werden kann. Analog ist durch die Länge der Kontaktflächen der elektrischen Kontakte 22, 24, 32, und 34, welche sich in y-Richtung erstrecken, das Maß bestimmt, inwieweit das Fahrzeug 8 in y-Richtung aus der vorgegebenen Parkposition ohne Auswirkungen auf die Kontaktierung zum Aufladen unter der Ladestation geparkt werden kann.

Die Kontaktflächen der elektrischen Kontakte 21-24 des Fahrzeugs 8 liegen in einer horizontalen Ebene und sind ihrer Länge nach in einem Rechteck angeordnet und zueinander elektrisch isoliert. Sie sind fahrzeugfest mit dem Fahrzeug verbunden. Die Kontaktflächen der elektrischen Kontakte 31-34 der Ladestation liegen ebenfalls in einer horizontalen Ebene und sind ihrer Länge nach kreuzförmig angeordnet und gegenseitig elektrisch isoliert. Die Anordnung der Kontaktflächen der elektrischen Kontakte 21-24 und 31-34 auf dem Fahrzeug 8 und an der Ladestation ist austauschbar, d.h. eine umgekehrte Anordnung ist ebenfalls möglich. Da die Kontaktflächen der elektrischen Kontakte 21-24 und 31-34 ihrer Länge nach kreuzförmig respektive rechteckförmig angeordnet sind, schneiden sich ihre jeweiligen Längsachsen in einem respektive vier Punkten. Da die zueinander komplementären Kontaktflächen der elektrischen Kontakte 21-24 und 31-34 in parallelen Ebenen liegen, berühren sie sich flächig.

Die zur Herstellung der galvanischen Verbindungen jeweils paarweise zueinander komplementären der elektrischen Kontakte 21 und 34, 22 und 31, 23 und 32, 24 und 33 der Ladestation und des Fahrzeugs 8 sind in der vorgegebenen Parkposition des Fahrzeugs 8 senkrecht zueinander ausgerichtet. Ihre Längsachsen kreuzen sich in der Draufsicht. Sie berühren sich nicht nur wenigstens in einem Punkt, ihre Kontaktflächen überlagern sich hier überlappend. Das Fahrzeug und die Ladestation sind entsprechend ausgebildet. Der elektrische Kontakt 21 bildet den fahrzeugseitigen Kontaktpartner zum elektrischen Kontakt 34 der Ladestation und umgekehrt; gleichermaßen bilden die der elektrischen Kontakte 22 und 31, 23 und 32, 24 und 33 die jeweiligen Kontaktpartner zum Herstellen von galvanischen Verbindungen unter gegenseitigem Kontakt.

In der Draufsicht liegen die jeweils zueinander komplementären elektrischen Kontakte 21 und 34, 22 und 31, 23 und 32, 24 und 33 über Kreuz, die zueinander komplementären Kontaktflächen kreuzen sich ihrer Länge nach.

Mit der Erfindung ist es möglich, die Größe und das Gewicht der Kontaktvorrichtung auf dem Fahrzeug zu minimieren und seinen sicheren elektrischen Kontakt für vier Pole zwischen der Ladestation und dem Fahrzeug herzustellen und das ohne bewegliche Teile auf dem Fahrzeug. Das daraus resultierende geringere Gewicht des Fahrzeugs führt zu einem reduzierten Kraftstoffverbrauch und gesunkenen Wartungskosten. Es muss keine Flotte von Fahrzeugen mit Pantographen ausgerüstet werden, sondern lediglich eine überschaubare Anzahl an Ladestationen. Die Größen der elektrischen Kontakte und ihrer Kontaktflächen lassen sich vergleichsweise gering halten, ohne dabei die Anforderungen an die Parkgenauigkeit unmäßig zu erhöhen, da eine hohe Toleranz für die Parkposition ermöglicht ist.

## Patentansprüche

1. Ladevorrichtung umfassend eine Ladestation (1) für ein Fahrzeug (8) und ein elektrisch aufladbares Fahrzeug (8), wobei die Ladestation (1) vier elektrische Kontakte (31, 32, 33, 34) umfasst, um in gegenseitigem Kontakt mit vier komplementären elektrischen Kontakten (21, 22, 23, 24) des Fahrzeugs (8) elektrische Verbindungen zwischen dem Fahrzeug (8) und der Ladestation (1) herzustellen, wobei die Ladestation (1) derart ausgebildet ist, dass die elektrischen Kontakte (31, 32, 33, 34) der Ladestation (1) wenigstens vertikal bewegbar ausgeführt sind, wobei sie Längen aufweisen, welche eine Breite des Fahrzeugs (8) unterschreiten, wobei die Kontakte (21, 22, 23, 24) des Fahrzeugs (8) fahrzeugseitig fest angeordnet sind, wobei sie Längen aufweisen, welche eine Breite des Fahrzeugs (8) unterschreiten, **dadurch gekennzeichnet, dass** die elektrischen Kontakte des Fahrzeugs und der Ladestation jeweils in einer gemeinsamen Ebene liegen und ihrer Länge nach rechteckförmig oder kreuzförmig angeordnet sind, wobei die Kontakte (31, 32, 33, 34) der Ladestation (1) jeweils so angeordnet sind, dass sie in der vorgegebenen Ladeposition des Fahrzeugs (8) quer zu ihren jeweils komplementären elektrischen Kontakten (21, 22, 23, 24) des Fahrzeugs (8) verlaufen.

2. Ladevorrichtung nach Anspruch 1, **dadurch gekennzeichnet, dass** die elektrischen Kontakte (21, 22, 23, 24) auf einem Dach des Fahrzeugs (8) frei von oben zugänglich angeordnet sind.

3. Ladevorrichtung nach einem der Ansprüche 1 oder 2, **dadurch gekennzeichnet, dass** die Ladestation einen Galgen (2, 3) umfasst, mittels welchem die elektrischen Kontakte (31, 32, 33, 34) der Ladestation vertikal beweglich ausgebildet sind.

## Claims

1. Charging apparatus comprising a charging station (1) for a vehicle (8) and an electrically chargeable vehicle (8), wherein the charging station (1) comprises four electrical contacts (31, 32, 33, 34) in order to establish, in mutual contact with four complementary electrical contacts (21, 22, 23, 24) of the vehicle (8), electrical connections between the vehicle (8) and the charging station (1), wherein the charging station (1) is designed in such a way that the electrical contacts (31, 32, 33, 34) of the charging station (1) are designed in an at least vertically movable manner, wherein the said electrical contacts of the charging station have lengths which are less than a width of the vehicle (8), wherein the contacts (21, 22, 23, 24) of the vehicle (8) are fixedly arranged on the vehicle, wherein the said contacts of the vehicle have lengths which are less than a width of the vehicle (8), **characterized in that** the electrical contacts of the vehicle and of the charging station each lie in a common plane and are arranged in a rectangular or crosswise manner in respect of their length, wherein the contacts (31, 32, 33, 34) of the charging station (1) are each arranged such that they run transverse to their respectively complementary electrical contacts (21, 22, 23, 24) of the vehicle (8) in the prespecified charging position of the vehicle (8).

2. Charging apparatus according to Claim 1, **characterized in that** the electrical contacts (21, 22, 23, 24) are arranged on a roof of the vehicle (8) such that they are freely accessible from above.

3. Charging apparatus according to either of Claims 1 and 2, **characterized in that** the charging station comprises a gallows (2, 3) by means of which the electrical contacts (31, 32, 33, 34) of the charging station are designed in a vertically movable manner.

## Revendications

1. Dispositif de charge, comprenant un poste (1) de charge pour un véhicule (8) et un véhicule (8) pouvant être chargé électriquement, le poste (1) de charge comprenant quatre contacts (31, 32, 33, 34) électriques pour produire, en contact mutuel avec quatre contacts (21, 22, 23, 24) électriques complémentaires du véhicule (8), des liaisons électriques entre le véhicule (8) et le poste (1) de charge, le poste (1) de charge étant constitué de manière à ce que les contacts (31, 32, 33, 34) électriques du poste (1) de charge soient réalisés en étant mobiles au moins verticalement, dans lequel ils ont des longueurs qui n'atteignent pas une largeur du véhicule (8), les contacts (21, 22, 23, 24) du véhicule (8) étant montés fixes du côté du véhicule, dans lequel ils ont des longueurs qui n'atteignent pas une largeur du véhicule (8), **caractérisé en ce que** les contacts électriques du véhicule et du poste de charge se trouvent respectivement dans un plan commun et sont disposés selon leur longueur, à angle droit ou en croix, les contacts (31, 32, 33, 34) du poste (1) de charge étant disposés respectivement de manière à ce qu'ils s'étendent dans la position de charge donnée à l'avance du véhicule (8), transversalement à leurs contacts (21, 22, 23, 24) électriques respectivement complémentaires.

2. Dispositif de charge suivant la revendication 1, **caractérisé en ce que** les contacts (21, 22, 23, 24) électriques sont disposés, en étant accessibles librement par le haut, sur un toit du véhicule (8).

3. Dispositif de charge suivant l'une des revendications 1 ou 2, **caractérisé en ce que** le poste de charge comprend une potence (2, 3) au moyen de laquelle les contacts (31, 32, 33, 34) électriques du poste de charge sont constitués en étant mobiles verticalement.
